# EUROPEAN PATENT APPLICATION

(11) **EP 4 155 250 A1**
(43) Date of publication of application: **29.03.2023**
(21) Application number: 21854496.3
(22) Date of filing: 02.07.2021
(51) Int. Cl.: B66B 5/26

(54) **OPERATION LOCKING DEVICE FOR CLIMB-FREE APPARATUS**

(30) Priority: 04.08.2020 CN 202010773255
(71) Applicant: Ficont Industry (Beijing) Co., Ltd., Beijing 101106 (CN)
(72) Inventor: WANG, Xijun, Beijing 101106 (CN); ZHANG, Guozhu, Beijing 101106 (CN)
(74) Representative: Geskes, Christoph
(86) International application number: PCT/CN2021/104149
(87) International publication number: WO 2022/028169

(57) **Abstract**

An operation locking device for a climb-free apparatus, the operation locking device comprising: a locking assembly (100), a fixing block (200) and a triggering assembly (300), wherein the fixing block (200) is mounted on a climb-free apparatus trolley (400); the locking assembly (100) is connected in the fixing block (200) by means of the triggering assembly (300); and the triggering assembly (300) is used for controlling the locking assembly (100) to switch between a locked state and an unlocked state. When the climb-free apparatus trolley (400) is in an out-of-control state, the triggering assembly (300) can trigger the locking assembly (100) to switch to the locked state and to be clamped in a sliding rail (800), so that the climb-free apparatus trolley (400) stops operating; and when the climb-free apparatus trolley (400) needs to slide up and down to adjust a working position, the triggering assembly (300) triggers the locking assembly (100) to switch to the unlocked state and to be separated from the sliding rail (800).

## Description

### CROSS-REFERENCE TO RELATED APPLICATIONS

The present application claims priority to Chinese Application No. 202010773255.7 filed on August 04, 2020, entitled "Operation Locking Device for Climb-free System", which is hereby incorporated by reference in its entirety.

### TECHNICAL FIELD

The present application relates to the technical field of climb-free system, and more specifically, to an operation locking device for climb-free system.

### BACKGROUND

With the development of society, high-altitude climbing work and high-altitude transportation are very common. Lifting equipment, especially in the field of wind power generation, is often used for personnel and material transportation and maintenance work and the lifting equipment can greatly improve the work efficiency of staff.

Climb-free system is a common lifting equipment. At present, all the traditional climb-free systems fail to be independently provided with a locking device for a climb-free system trolley, and it cannot completely avoid that the climb-free system trolley may run out of control. In order to ensure the safety of the staff, there is an urgent need to develop a locking device that can reliably lock the climb-free system.

### SUMMARY

In view of the deficiencies in the related art, the present application provides an operation locking device for climb-free system.

According to a first aspect of the present application, provided is an operation locking device for climb-free system, which includes: a locking assembly, a fixing block and a triggering assembly, in which:
the fixing block is mounted on a climb-free system trolley, the locking assembly is connected into the fixing block by the triggering assembly and the triggering assembly is configured to control the locking assembly to be switchable between a locked state and an unlocked state.

According to the operation locking device for climb-free system provided by the present application, the operation locking device for climb-free system further includes a spring baffle and the locking assembly includes a stabilizing shaft, a lock block and a triggering spring,
the spring baffle is connected to an end of the fixing block, the spring baffle is provided with a through hole for allowing the stabilizing shaft to run through, and an end portion of the lock block is provided with a second mounting space at an end.

The fixing block is provided with a hollow cavity into which the lock block is insertable. The stabilizing shaft has an end connected to the second mounting space and another end running through the through hole. The triggering spring runs through the stabilizing shaft and is stuck between the spring baffle and the lock block.

According to the operation locking device for climb-free system provided by the present application, the triggering assembly includes a triggering shaft and a triggering head. The fixing block is provided with a sliding slot and a locking slot. The climb-free system trolley is provided with a chute for allowing the triggering shaft to move. The lock block is further provided with a first mounting space.

An end of the triggering shaft runs through the chute and the sliding slot, and is connected to the first mounting space. Another end of the triggering shaft is connected to the triggering head. The triggering shaft is provided with a sliding block and a locking block.

The sliding block may slide from the sliding slot to the locking slot to drive the locking block to slide and be stuck in the locking slot, and drive the locking assembly to be in the unlocked state.

According to the operation locking device for climb-free system provided by the present application, the triggering shaft may be pulled to a position where the locking block is disengaged from the locking slot, and the triggering spring drives the sliding block to slide from the locking slot into the sliding slot, and drives the locking assembly to be in the locked state, the lock block is clamped in a sliding rail of the climb-free system, and the climb-free system trolley is locked to a target position.

According to the operation locking device for climb-free system provided by the present application, the triggering assembly further includes an anti-drop spring and a washer. The anti-dropping spring is sleeved on the triggering shaft. Also, the anti-drop spring is stuck between the climb-free system trolley and the fixing block. The washer is mounted between the climb-free system trolley and the anti-drop spring.

According to the operation locking device for climb-free system provided by the present application, the triggering head is connected to the triggering shaft by a screw.

According to the operation locking device for climb-free system provided by the present application, a connecting block is provided on the fixing block, and the fixing block is detachably connected to the climb-free system trolley by the connecting block. The connecting block is connected to the climb-free system trolley by bolts.

According to a second aspect of the present application, there is provided an operation locking device for climb-free system, including: a locking assembly, a fixing block, a spring baffle, screws, and a triggering assembly. The fixing block is mounted on a climb-free system trolley by bolts. The spring baffle is mounted on the fixing block by screws. The locking assembly is locked in the fixing block by the triggering assembly, in which:
the locking assembly includes a stabilizing shaft, a lock block, and a triggering spring and the triggering assembly includes an anti-drop spring, a washer, a triggering shaft, a triggering head and a screw.

According to the operation locking device for climb-free system provided by the present application, the locking slot in the fixing block and the locking block of the triggering assembly are engaged with each other. The triggering assembly is inserted into the fixing block and into the locking assembly in the fixing block. When the triggering assembly is pulled toward the spring baffle, the locking block of the triggering assembly slides into the locking slot of the fixing block through the sliding slot of the fixing block, and the triggering assembly is locked in the locking slot and cannot move back and forth. Since the triggering assembly is inserted into the locking assembly, the locking assembly is also restricted from moving.

According to the operation locking device for climb-free system provided by the present application, the locking assembly is provided with a triggering spring. When the triggering head is lifted, the locking block of the triggering assembly is disengaged from the locking slot of the fixing block, the triggering spring in a compressed state in the locking assembly will be released quickly, and the lock block will be ejected and clamped in the sliding rail, to stop the operation of the climb-free system trolley.

In the operation locking device for climb-free system provided by the present application, the fixing block is mounted on the climb-free system trolley, and the locking assembly is connected in the fixing block by the triggering assembly. The triggering assembly is configured to control the locking assembly to be switchable between the locked state and the unlocked state.

Through this structural arrangement provided by the present application, the operation locking device for climb-free system is mounted on the climb-free system trolley by the fixing block. The triggering assembly can trigger the lock assembly to switch working state. When the climb-free system trolley is out of control, the triggering assembly can trigger the locking assembly to enter the locked state and be clamped in the sliding rail, to make the climb-free system trolley stop operating. When the climb-free system trolley is in a normal working state and needs to adjust a working position by sliding up and down, the triggering assembly triggers the locking assembly to switch to the unlocked state and to be separated from the sliding rail. Therefore, the operation locking device for climb-free system can lock the climb-free system trolley in time when it is out of control to effectively ensure the personal safety of the staff. In addition, the operation locking device for climb-free system trolley can improve the locking stability and reliability of the climb-free system trolley when the climb-free system trolley is in a normal working state.

### BRIEF DESCRIPTION OF THE DRAWINGS

In order to more clearly illustrate the technical solutions according to the embodiments of the present application or the related art, the accompanying drawings required to be used in the description of the embodiments or the related art will be briefly introduced as follows. It should be noted that the drawings in the following description are part of embodiments of the present application. For those ordinary skilled in the art, other drawings can also be obtained based on these drawings without any creative effort.
Fig. 1 is a structural exploded view of an operation locking device for climb-free system according to the present application.
Fig. 2 is a first structural diagram of mounting an operation locking device for climb-free system according to the present application on a climb-free system.
Fig. 3 is a second structural diagram of mounting an operation locking device for climb-free system according to the present application on a climb-free system.
Fig. 4 is a structural exploded view of a triggering assembly in an operation locking device for climb-free system according to the present application.
Fig. 5 is a structural exploded view of a locking assembly in an operation locking device for climb-free system according to the present application.
Fig. 6 is a structural diagram of a fixing block in an operation locking device for climb-free system according to the present application.

### Reference numerals:

100: locking assembly; 101: stabilizing shaft; 102: lock block; 103: triggering spring;
104: second mounting space; 105: first mounting space; 200: fixing block; 201: hollow cavity;
202: sliding slot; 203: locking slot; 300: triggering assembly; 301: triggering shaft;
302: triggering head; 303: sliding block; 304: locking block; 305: anti-drop spring;
306: washer; 400: climb-free system trolley; 401: chute; 500: spring baffle;
501: through hole; 600: screw; 701: connecting block; 702: bolt; 800: sliding rail.

### DETAILED DESCRIPTION

The implementations of the present application are further described in detail below in conjunction with the accompanying drawings and embodiments. The following embodiments are intended to illustrate the present application, but are not intended to limit the scope of the present application.

In the description of the embodiments of the present application, it should be noted that unless otherwise stated, the orientation or positional relations indicated by terms such as "center," "longitudinal," "transverse," "upper," "lower," "front," "rear," "left," "right," "vertical," "horizontal," "top," "bottom," "inner," "outer" and the like are based on the orientation or positional relations shown in the drawings, which are merely convenience of description of the embodiments of the present application and to simplify description, but does not indicate or imply that the stated device or element must have the particular orientation, or be constructed and operated in a particular orientation, and thus it is not to be construed as limiting the embodiments of the present application. Furthermore, the terms "first" and "second" are used for descriptive purposes only and should not be construed as indicating or implying a relative importance.

In the description of the embodiments of the present application, it should be noted that unless explicitly stated and defined otherwise, the terms "connected to" and "connected" shall be understood broadly, for example, it may be either fixedly connected or detachably connected, or can be integrated; it may be either mechanically connected, or electrically connected; it may be either directly connected or indirectly connected through an intermediate medium. The specific meanings of the terms above in the embodiments of the present application can be understood by a person skilled in the art in accordance with specific conditions.

In the embodiments of the present application, unless explicitly stated and defined otherwise, a first feature being "up" or "down" a second feature may mean that the first feature is directly contacted with the second feature, or the first feature and the second feature are indirectly contacted through an intermediate medium. Also, a first feature being "above," "over" and "on" a second feature may mean that the first feature is directly above or obliquely above the second feature, or simply means that a level of the first feature is higher than that of the second feature. A first feature being "below", "under" and "down" a second feature may mean that the first feature is directly below or obliquely below the second feature, or simply means that a level of the first feature is lower than that of the second feature.

In the description of this specification, the reference terms such as "one embodiment, " "some embodiments," "example," "specific example," or "some examples", and the like means that specific feature, structure, material or characteristic described in conjunction with the embodiment or example is included in at least one embodiment or example of the present application. In this description, schematic expressions of the above terms are not necessarily directed to the same embodiment or example. Furthermore, the described specific feature, structure, material or characteristic can be combined in any suitable manner in any one or more embodiments or examples. In addition, those skilled in the art can combine different embodiments or examples and features in different embodiments or examples described in this description to make the objectives and solutions of the embodiments of the present application more clear unless they are contradictory. In order to explain the objectives, technical solutions, and advantages of the present application more clearly, the technical solutions according to the embodiments of the present application will be clearly and completely described below in conjunction with the drawings in the embodiments of the present application. It should be noted that, the described embodiments are part of embodiments of the present application, rather than all of the embodiments. Based on the embodiments in the present application, all other embodiments obtained by those of ordinary skilled in the art without creative work are within the scope of the present application.

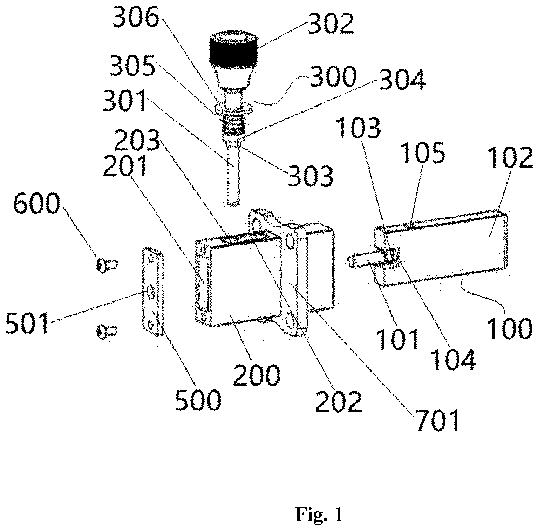

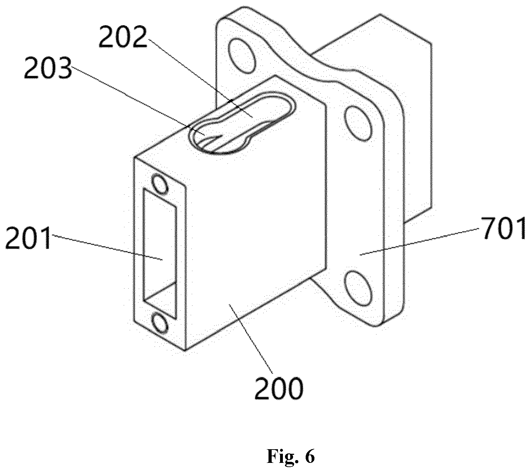

An operation locking device for climb-free system provided by an embodiment of the present application is described in conjunction with Fig. 1 and Fig. 6. It should be noted that the following descriptions are only exemplary embodiments of the present application, and do not constitute any particular limitation to the present application.

According to embodiments of the first aspect of the present application, provided is an operation locking device for climb-free system, as shown in Fig. 1 to Fig. 3, the operation locking device for climb-free system includes: a locking assembly 100, a fixing block 200 and a triggering assembly 300, in which:
the fixing block 200 is mounted on a climb-free system trolley 400, the locking assembly 100 is connected into the fixing block 200 by the triggering assembly 300, and the triggering assembly 300 is configured to control the locking assembly 100 to be switchable between a locked state and an unlocked state.

It should be noted here that when the locking assembly 100 is in the locked state, the locking assembly 100 can be clamped in a sliding rail 800 of the climb-free system, to make the climb-free system trolley 400 stop operating and be locked in a certain position; and when the locking assembly 100 is in the unlocked state, the locking assembly 100 is disengaged from the sliding rail 800 of the climb-free system and the climb-free system trolley 400 can slide freely. For example, when the triggering assembly 300 is switched between a first position and a second position, the locking assembly 100 can be driven to be switchable between the locked state and the unlocked state.

Through this structural arrangement, the operation locking device for climb-free system is mounted on the climb-free system trolley 400 by the fixing block 200. The triggering assembly 300 can trigger the lock assembly 100 to switch working state. When the climb-free system trolley 400 is out of control, the triggering assembly 300 can trigger the locking assembly 100 to enter the locked state and be clamped in the sliding rail 800, to make the climb-free system trolley 400 stop operating. When the climb-free system trolley 400 is in a normal working state and needs to adjust working position by sliding up and down, the triggering assembly 300 can trigger the locking assembly 100 to switch to the unlocked state and to be separated from the sliding rail 800. Therefore, the operation locking device for climb-free system can lock the climb-free system trolley 400 in time when it is out of control and effectively ensure the personal safety of the staff. In addition, when the climb-free system trolley 400 is in a normal working state, the operation locking device for climb-free system can improve a locking stability and reliability of the climb-free system trolley 400.

In an embodiment of the present application, the operation locking device for climb-free system further includes a spring baffle 500. The locking assembly 100 includes a stabilizing shaft 101, a lock block 102 and a triggering spring 103, in which:
the spring baffle 500 is connected to an end of the fixing block 200, the spring baffle 500 is provided with a through hole 501 for the stabilizing shaft 101 to run through and an end portion of the lock block 102 is provided with a second mounting space 104 at an end.

The fixing block 200 is provided with a hollow cavity 201 into which the lock block 102 can be inserted. The stabilizing shaft 101 has an end connected to the second mounting space 104 and another end movably running through the through hole 501. The triggering spring 103 runs through the stabilizing shaft 101 and is stuck between the spring baffle 500 and the lock block 102.

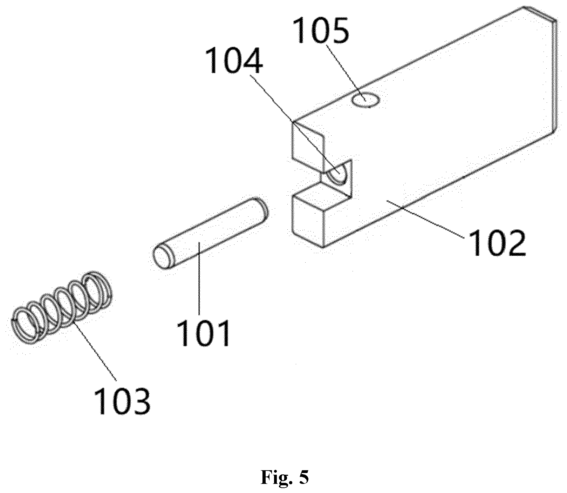

For example, as shown in Fig. 1 and Fig. 5, the hollow cavity 201 with openings at both ends is formed in the center of the fixing block 200, a shape and size of the hollow cavity 201 are matched with those of the lock block 102 and the lock block 102 can be inserted into the hollow cavity 201 and can slide in the hollow cavity 201.

A spring baffle 500 is detachably mounted at an opening of the fixing block 200 at the left end. For example, as shown in Fig. 1, the spring baffle 500 is fastened to the opening of the fixing block 200 at the left end by screws 600. The lock block 102 is inserted into the hollow cavity 201 from an opening of the fixing block 200 at the right end.

A left end surface of the lock block 102 is provided with the second mounting space 104. The spring baffle 500 is provided with a through hole 501. A right end of the stabilizing shaft 101 is connected to the lock block 102 by the second mounting space 104, and a left end of the stabilizing shaft 101 runs through the through hole 501 on the spring baffle 500 and extends to outside of the spring baffle 500.

The triggering spring 103 is sleeved on the stabilizing shaft 101 and stuck between the spring baffle 500 and the lock block 102. The triggering spring 103 can exert force on the lock block 102 and can drive the lock block 102 to move toward a direction away from the spring baffle 500.

It should be noted here that the above embodiments are only exemplary embodiments of the present application, and do not constitute any limitation to the present application. The connection manner between the spring baffle 500 and the fixing block 200 includes but is not limited to screw connection. Meanwhile, the connection manner between the stabilizing shaft 101 and the lock block 102 includes but is not limited to threaded connection.

In an embodiment of the present application, the triggering assembly 300 includes a triggering shaft 301 and a triggering head 302. The fixing block 200 is provided with a sliding slot 202 and a locking slot 203. The climb-free system trolley 400 is provided with a chute 401 for allowing the triggering shaft 301 to move. The lock block 102 is further provided with a first mounting space 105.

An end of the triggering shaft 301 runs through the chute 401 and the sliding slot 202, and is connected to the first mounting space 105. Another end of the triggering shaft 301 is connected to the triggering head 302. The triggering shaft 301 is provided with a sliding block 303 and a locking block 304.

The sliding block 303 can slide from the sliding slot 202 to the locking slot 203, to drive the locking block 304 to slide and be stuck in the locking slot 203, and drive the locking assembly 100 to be in the unlocked state.

Further, in an embodiment of the present application, the triggering shaft 301 can be pulled to a position where the locking block 304 can be disengaged from the locking slot 203, and the triggering spring 103 drives the sliding block 303 to slide from the locking slot 203 into the sliding slot 202, and drive the locking assembly 100 to be in the locked state, where the lock block 102 is clamped in a sliding rail 800 of the climb-free system, and the climb-free system trolley 400 is locked to a target position.

Further, in an embodiment of the present application, the triggering assembly 300 further includes an anti-drop spring 305 and a washer 306. The anti-drop spring 305 is sleeved on the triggering shaft 301. Also, the anti-drop spring 305 is stuck between the climb-free system trolley 400 and the fixing block 200. The washer 306 is mounted between the climb-free system trolley 400 and the anti-drop spring 305.

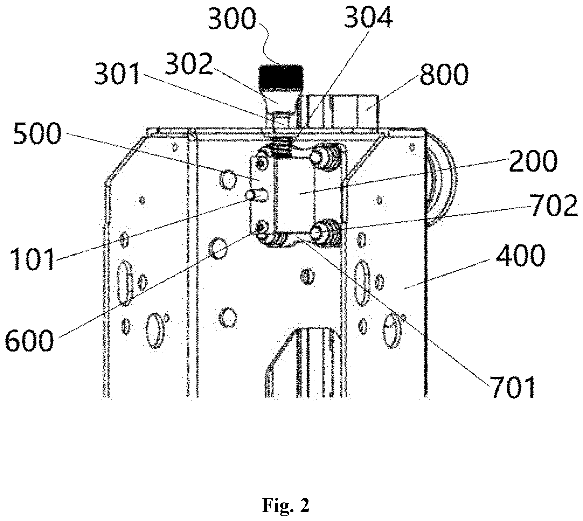

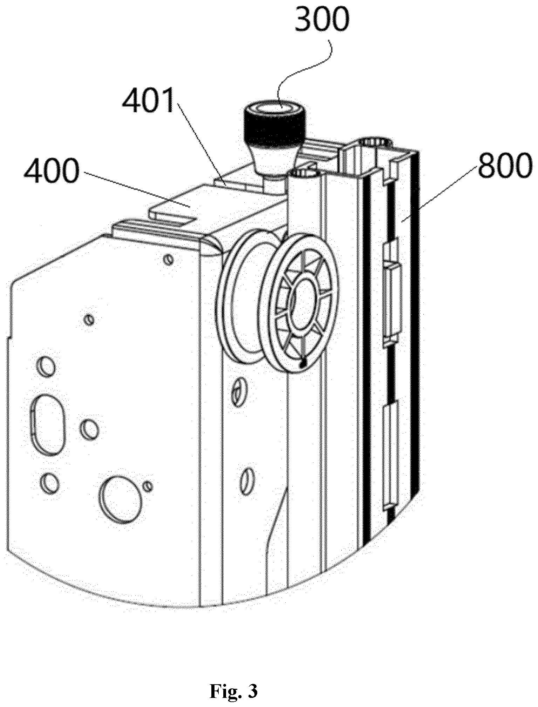

For example, as shown in Fig. 2, the fixing block 200 is connected to the climb-free system trolley 400. As shown in Fig. 3, a chute 401 is formed on the climb-free system trolley 400. As shown in Fig. 6, a sliding slot 202 and a locking slot 203 are formed on the fixing block 200.

As shown in Fig. 1 to Fig. 6, description will be made below based on a direction shown in Fig. 1, the lower end of the triggering shaft 301 runs through the sliding slot 401 on the climb-free system trolley 400 and the sliding slot 202 or the locking slot 203 on the fixing block 200, and is connected into the first mounting space 105 on the lock block 102. The upper end of the triggering shaft 301 is connected to the triggering head 302 for facilitating the pulling of the triggering assembly 300 by a hand.

A locking block 304 and a sliding block 303 are formed on the triggering shaft 301 in sequence from top to bottom at a position near the middle of the triggering shaft 301. The anti-drop spring 305 is sleeved on the triggering shaft 301, and the anti-drop spring 305 is located between the fixing block 200 and the triggering head 302. The washer 306 is mounted between the anti-drop spring 305 and the climb-free system trolley 400, to prevent the anti-drop spring 305 from loosening and dropping.

In a specific use process, in an initial state, the locking block 304 on the triggering shaft 301 is stuck in the locking slot 203 on the fixing block 200. When the climb-free system trolley 400 is out of control, the triggering head 302 is pulled upwards, and the triggering head 302 drive the triggering shaft 301 to move upwards, and the locking block 304 is disengaged from the locking slot 203 and the sliding block 303 is located in the sliding slot 202. At this time, the triggering spring 103 exerts force on the lock block 102, to drive the lock block 102 to move toward the direction away from the spring baffle 500, the sliding block 303 slides along the sliding slot 202 to the direction away from the spring baffle 500, the lock block 102 protrudes out of the hollow cavity 201 of the fixing block 200 and is clamped in the sliding rail 800 of the climb-free system, and the climb-free system trolley 400 stops operating and is locked in a certain position to ensure safety. Alternatively, when the climb-free system trolley 400 stops at a target working position, the locking assembly can be in the locked state, to improve the stability and safety of the climb-free system trolley 400.

When the climb-free system trolley 400 is in a normal operation state and needs to slide up and down freely, the triggering head 302 can be held and controlled to move toward a direction proximal to the spring baffle 500, and the sliding block 303 moves in the sliding slot 202 along a direction proximal to the locking slot 203. When the sliding block 303 slides to the position where the locking slot 203 is located, the triggering head 302 can be pressed downward, and the locking block 304 is stuck in the locking slot 203. At this time, the lock block 102 is retracted back into the hollow cavity 201 of the fixing block 200 and disengaged from the sliding rail 800 of the climb-free system.

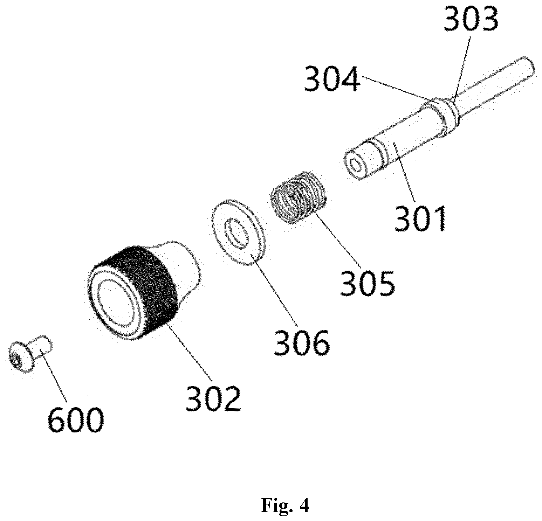

In one embodiment of the present application, as shown in Fig. 4, the triggering head 302 is connected to the triggering shaft 301 by a screw 600.

It should be noted here that the above-mentioned embodiments are only exemplary embodiments of the present application, and do not constitute any limitation to the present application. For example, the connection manner between the triggering head 302 and the triggering shaft 301 includes but is not limited to screw connection.

In one embodiment of the present application, as shown in Fig. 2 and Fig. 3, a connecting block 701 is provided on the fixing block 200. The fixing block 200 is detachably connected to the climb-free system trolley 400 by the connecting block 701.

It should be noted here that the present application does not limit the detachable connection manner between the connecting block 701 and the climb-free system trolley 400. For example, in one embodiment of the present application, as shown in Fig. 2, the connecting block 701 is connected to the climb-free system trolley 400 by bolts 702.

Embodiments of the second aspect of the present application provide an operation locking device for climb-free system, including: a locking assembly 100, a fixing block 200, a spring baffle 500, screws 600, and a triggering assembly 300. The fixing block 200 is mounted on the climb-free system trolley 400 by bolts 702. The spring baffle 500 is mounted on the fixing block 200 by screws 600. The locking assembly 100 is locked in the fixing block 200 by the triggering assembly 300 in which:

the locking assembly 100 includes a stabilizing shaft 101, a lock block 102, and a triggering spring 103 and the triggering assembly 300 includes an anti-drop spring 305, a washer 306, a triggering shaft 301, a triggering head 302 and a screw 600.

Further, in an embodiment of the present application, the locking slot 203 in the fixing block 200 and the locking block 304 of the triggering assembly 300 are engaged with each other. The triggering assembly 300 is inserted into the fixing block 200 and into the locking assembly 100 in the fixing block 200. When the triggering assembly 300 is pulled toward the spring baffle 500, the locking block 304 of the triggering assembly 300 slides into the locking slot 203 of the fixing block 200 through the sliding slot 202 of the fixing block 200, and the triggering assembly 300 is locked in the locking slot 203 and cannot move back and forth. Since the triggering assembly 300 is inserted into the locking assembly 100, the locking assembly 100 is also restricted from moving.

Further, in an embodiment of the present application, the locking assembly 100 is provided with a triggering spring 103. When the triggering head 302 is lifted, the locking block 304 of the triggering assembly 300 is disengaged from the locking slot 203 of the fixing block 200. The triggering spring 103 in a compressed state in the locking assembly 100 will be released quickly, and the lock block 102 will be ejected and clamped in the sliding rail 800, to stop the operation of the climb-free system trolley 400.

A shown in Fig. 1, the operation locking device for climb-free system in the present embodiment includes a locking assembly 100, a triggering assembly 300, a fixing block 200, a spring baffle 500, and screws 600.

A shown in Fig. 4, the anti-drop spring 305 and the washer 306 sequentially penetrates through the triggering shaft 301 and the triggering head 302 is fixed on the triggering shaft 301 with the screw 600 to form the triggering assembly 300.

A shown in Fig. 5, the stabilizing shaft 101 penetrates through the second mounting space 104 of the lock block 102, and then the triggering spring 103 penetrates through the stabilizing shaft 101 to form the locking assembly 100.

The fixing block 200 is fixed on the free-climbing trolley 400 by the bolts 702, the spring baffle 500 is connected to the fixing block 200 by the screws 600, the locking assembly 100 is inserted into the fixing block 200, the triggering assembly 300 is inserted into the first mounting space 105 of the locking assembly 100 through the sliding slot 202 on the fixing block 200. When the triggering assembly 300 is pulled backward, the sliding block 303 moves in the sliding slot 202, then the locking block 304 slides into the locking slot 203, the locking assembly 100 is fixed and the triggering spring 103 is in the compressed state.

In use, when the triggering head 302 of the triggering assembly 300 is pulled upward, the locking block 304 is disengaged from the locking slot 203, and the locking assembly 100 and the triggering assembly 300 become a movable state. The triggering spring 103 in the compressed state is quickly released, and the lock block 102 is ejected and inserted into the sliding rail 800, then the climb-free system trolley 400 is quickly locked.

The operation device is an independent part in the whole set of equipment of the climb-free system, which is convenient to use when the climb-free system is out of control, and greatly reduces the safety problem of the user of the climb-free system.

Finally, it should be noted that the above embodiments are only used to illustrate the solutions of the present application, but not to limit them. Although the present application has been described in detail in conjunction with the foregoing embodiments, those ordinary skilled in the art should understand that they can still modify the solutions recorded in the foregoing embodiments or equivalently replace some features thereof. These modifications or replacements do not make the essence of the corresponding solutions deviate from the spirit and scope of the solutions of the embodiments of the present application.

## Claims

1. An operation locking device for climb-free system, comprising: a locking assembly, a fixing block and a triggering assembly,
wherein the fixing block is mounted on a climb-free system trolley, the locking assembly is connected into the fixing block by the triggering assembly, and the triggering assembly is configured to control the locking assembly to be switchable between a locked state and an unlocked state.

2. The device of claim 1, further comprising a spring baffle,
wherein the locking assembly comprises a stabilizing shaft, a lock block and a triggering spring,
the spring baffle is connected to an end of the fixing block, the spring baffle is provided with a through hole for allowing the stabilizing shaft to run through, and an end portion of the lock block is provided with a second mounting space at an end, and
the fixing block is provided with a hollow cavity into which the lock block is insertable, the stabilizing shaft has an end connected to the second mounting space and another end movably running through the through hole, the triggering spring is sleeved on the stabilizing shaft and stuck between the spring baffle and the lock block.

3. The device of claim 2, wherein the triggering assembly comprises a triggering shaft and a triggering head, the fixing block is provided with a sliding slot and a locking slot, the climb-free system trolley is provided with a chute for allowing the triggering shaft to move, and the lock block is further provided with a first mounting space,
wherein an end of the triggering shaft runs through the chute and the sliding slot, and is connected to the first mounting space, another end of the triggering shaft is connected to the triggering head, and the triggering shaft is provided with a sliding block and a locking block,
wherein the sliding block slides from the sliding slot to the locking slot, to drive the locking block to slide and be stuck in the locking slot, and drive the locking assembly to be in the unlocked state.

4. The device of claim 3, wherein the triggering shaft is pulled to a position where the locking block is disengaged from the locking slot, the triggering spring drives the sliding block to slide from the locking slot into the sliding slot, and drives the locking assembly to be in the locked state, the lock block is clamped in the sliding rail of the climb-free system, and the climb-free system trolley is locked to a target position.

5. The device of claim 3, wherein the triggering assembly further comprises an anti-drop spring and a washer, the anti-drop spring is sleeved on the triggering shaft and the anti-drop spring is stuck between the climb-free system trolley and the fixing block, and the washer is mounted between the climb-free system trolley and the anti-drop spring.

6. The device of claim 3, wherein the triggering head is connected to the triggering shaft by a screw.

7. The device of claim 1, wherein a connecting block is provided on the fixing block, the fixing block is detachably connected to the climb-free system trolley by the connecting block, and the connecting block is connected to the climb-free system trolley by bolts.

8. An operation locking device for climb-free system, comprising: a locking assembly, a fixing block, a spring baffle, screws, and a triggering assembly,
wherein the fixing block is mounted on a climb-free system trolley by bolts, the spring baffle is mounted on the fixing block by screws, and the locking assembly is locked in the fixing block by the triggering assembly,
wherein the locking assembly comprises a stabilizing shaft, a lock block, and a triggering spring, the triggering assembly comprises an anti-drop spring, a washer, a triggering shaft, a triggering head and a screw.

9. The device of claim 8, wherein the locking slot in the fixing block and the locking block of the triggering assembly are engaged with each other, the triggering assembly is inserted into the fixing block and into the locking assembly in the fixing block, when the triggering assembly is pulled toward the spring baffle, the locking block of the triggering assembly slides into the locking slot of the fixing block through the sliding slot of the fixing block, then the triggering assembly is locked in the locking slot and fails to move back and forth, and the locking assembly is also restricted from moving when the triggering assembly is inserted into the locking assembly.

10. The device of claim 8, wherein the locking assembly is provided with a triggering spring; when the triggering head is lifted, the locking block of the triggering assembly is disengaged from the locking slot of the fixing block, the triggering spring in a compressed state in the locking assembly is released quickly, and the lock block is ejected and clamped in the sliding rail, to stop the operation of the climb-free system trolley.
